# FASCICULE DE BREVET EUROPEEN

(11) **EP 1 228 977 B1**
(45) Date de publication et mention de la délivrance du brevet: **14.12.2005**
(21) Numéro de dépôt: 02290276.1
(22) Date de dépôt: 05.02.2002
(51) Int. Cl.: B65D 65/40, B32B 3/12, E04C 2/20, B29D 24/00, B29C 47/20

(54) **Plaques alvéolaires en matière thermoplastique, procédé et dispositif pour la fabrication de ces plaques**
Schaumstoffplatten aus thermoplastischem Material sowie Verfahren zu deren Herstellung
Foamed slabs made from thermoplastic material and process for producing them

(30) Priorité: 05.02.2001 FR 0101518
(43) Date de publication de la demande: 07.08.2002
(73) Titulaire: KAYSERSBERG PACKAGING, 68320 Kunheim (FR)
(72) Inventeur: Coste, Jean-Philippe, 68240 Kaysersberg (FR); Porret, Laurent, 68180 Horbour-Wihr (FR)
(74) Mandataire: Bernasconi, Jean Raymond

(56) Documents cités:
- EP-A- 0 158 951
- EP-A- 0 649 736
- WO-A-98/41388
- DE-A- 3 225 764
- DE-A- 4 431 585
- GB-A- 2 186 253
- US-A- 4 478 563
- US-A- 4 937 125
- US-A- 5 089 203

## Description

La présente invention a trait à de nouvelles plaques alvéolaires en matière thermoplastique. Par matière thermoplastique, on entend, dans le sens de la présente invention, des matières telles que le polyéthylène, le polypropylène et les polystyrènes et, généralement, les matières thermoplastiques susceptibles de réaliser des structures généralement plates obtenues par extrusion.

L'invention a également trait à un procédé ainsi qu'à un dispositif pour réaliser ces plaques.

Il est connu de réaliser, par extrusion, des plaques thermoplastiques alvéolaires ajourées ayant une structure à nid d'abeilles plus ou moins hexagonale, les parois des alvéoles s'étendant perpendiculairement au plan d'extrusion de la plaque. De telles plaques peuvent être utilisées, notamment, dans l'emballage, par exemple comme fond de conteneur, ou comme fond de coffre de voiture ou divers autres usages. Des plaques de ce genre peuvent être obtenues, par extrusion, par exemple comme décrit dans la demande de brevet WO98/41388.

Ces plaques ont une assez bonne résistance à la flexion dans le sens marche, c'est-à-dire la direction d'extrusion, mais une mauvaise rigidité dans le sens perpendiculaire, dit de travers.

La présente invention se propose, notamment, de remédier à ces inconvénients.

L'invention a pour objet une plaque présentant deux nappes ou « couvertures » continues, parallèles, lesdites nappes étant réunies, d'un seul tenant, par un ensemble d'entretoises sensiblement perpendiculaires auxdites nappes et formant des alvéoles, de préférence sensiblement fermées, de préférence généralement polygonales, notamment hexagonales et juxtaposées, par exemple, en nid d'abeilles.

Les plaques selon l'invention peuvent être obtenues généralement par extrusion de la matière thermoplastique. On constate, alors, de façon surprenante que les performances mécaniques de la plaque dans le sens de travers se rapprochent beaucoup de celle dans le sens marche.

On préfère que les alvéoles se rapprochent de la forme d'un hexagone régulier, mais elles peuvent être de forme plus allongée, dans le sens extrusion. D'autres formes polygonales sont possibles.

On a également trouvé que, bien qu'il soit préférable que les alvéoles soient fermées, on pouvait également obtenir un accroissement important de la résistance à la flexion dans le sens de travers par des entretoises polygonales ou ondulées périodiques définissant des alvéoles successives ouvertes et communiquant entre elles. Là également on préfère que chacune des entretoises s'étendent selon une ligne polygonale brisée, mais on peut également réaliser des entretoises ayant une allure ondulante.

De préférence, conformément à l'invention, on peut prévoir que l'angle formé en un emplacement de l'alvéole par la paroi locale ou la tangente à la paroi, si elle est courbe, et la direction d'extrusion soit au moins égal à 20 °. Par exemple, pour l'alvéole en forme d'hexagone régulier, cet angle est de l'ordre de 60°.

Les plaques selon l'invention peuvent avoir des dimensions variables. On préfère cependant que les plaques aient une épaisseur totale comprise entre 4 et 40, et plus préférablement entre 7 et 12 mm.

On préfère également que la masse surfacique de ces plaques s'étende entre 800 et 4500 g/m² et plus préférablement entre 1000 et 2500 g/m², ces valeurs s'étageant de préférence en fonction de l'épaisseur totale de la plaque.

Dans ce cadre, on préfère que le rapport entre l'épaisseur d'une entretoise d'alvéole et l'épaisseur de la nappe supérieure ou inférieure, soit compris entre 0,4 et 1,5 et plus préférablement entre 0,6 et 1,2.

De façon avantageuse, on préfère que les dimensions maximales, par exemple la plus grande diagonale d'hexagone, de l'alvéole, soient comprises entre 15 et 40 mm, ce qui correspond à un nombre d'hexagones généralement compris entre 800 et 3000 par m².

Les épaisseurs des deux couvertures peuvent être différentes bien que l'on préfère qu'elles soient sensiblement identiques.

L'invention a également pour objet un procédé de fabrication de ces plaques par extrusion, caractérisé en ce que l'on extrude simultanément une structure alvéolaire en nid d'abeilles par des moyens de filière présentant des fentes périodiques permettant chacune l'extrusion d'une entretoise et que l'on dévie périodiquement la direction d'extrusion de ces entretoises, par exemple en faisant tourner les moyens de filière, pour orienter l'extrusion, pour obtenir une structure en alvéoles, et deux nappes de couverture parallèles, de part et d'autre des fentes d'extrusion d'entretoises de manière à amener la matière de chaque nappe au contact des bords respectifs des entretoises en formation.

On constate également de façon surprenante, que ce procédé permet d'assurer une meilleure régularité et une meilleur cohérence de la structure en nid d'abeilles.

De préférence, les moyens de filière sont tournés par intervalles de façon à extruder successivement des portions d'entretoises sensiblement rectilignes, par exemple pour déterminer un demi-hexagone, les angles extrêmes étant de préférence tels que deux demi-hexagones voisins forment un hexagone fermé par jonction périodique des deux entretoises.

Si l'on souhaite réaliser des alvéoles de forme ondulante non rectiligne, on peut, par exemple, faire osciller de façon progressive les moyens tournants de filière.

On peut également obtenir des entretoises de forme ondulante en jouant sur la vitesse d'extrusion et/ou de rotation des moyens tournants de filière d'une façon telle qu'il ne se forme pas de liaison jointive au niveau de deux entretoises qui se rapprochent.

L'invention a également pour objet un dispositif pour la mise en oeuvre de ce procédé pour fabriquer de telles plaques thermoplastiques alvéolaires, caractérisé en ce qu'il comporte, associé à des moyens d'extrusion, un poinçon d'extrusion comportant des moyens de filières présentant des fentes périodiques alimentées par, chaque fois, un canal, des moyens pour faire pivoter le plan desdites fentes et orienter l'extrusion des parois d'alvéoles pour obtenir une structure en nid d'abeilles, et deux fentes continues parallèles alimentées par deux canaux pour extruder deux nappes parallèles de part et d'autre des alvéoles en cours d'extrusion, les sorties des fentes d'extrusion des nappes étant perpendiculaires aux sorties des fentes formant les alvéoles, et étant orientées pour réaliser une plaque d'un seul tenant.

D'autres avantages et caractéristiques de l'invention apparaîtront à la lecture de la description suivante en se référant aux dessins annexés dans lequel :
La figure 1 représente une vue schématique en perspective d'une plaque selon l'invention.
La figure 2 représente une vue en coupe d'un poinçon de filière permettant la réalisation des plaques par le procédé selon l'invention.
La figure 3 représente une vue en section de ce poinçon dans le plan III-III de la figure 2.
La figure 4 représente une vue antérieure de ce poinçon.
La figure 5 représente une vue de dessus de ce poinçon.

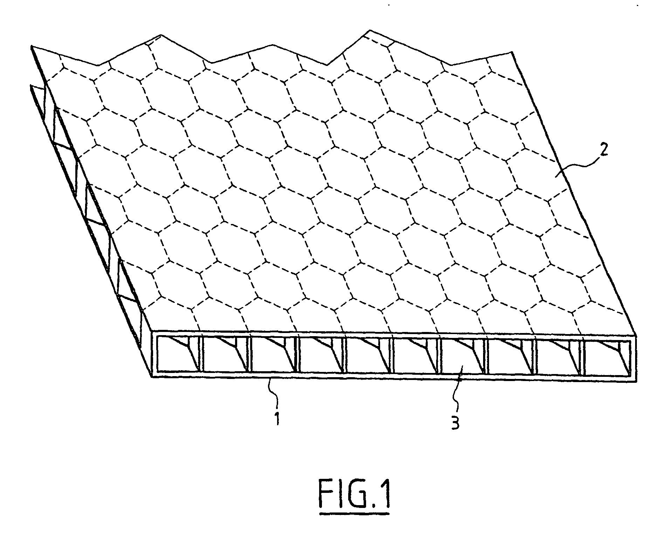

La plaque alvéolaire de la figure 1 présente deux nappes ou couvertures inférieure 1 et supérieure 2 disposées de part et d'autre d'une structure interne alvéolaire 3, les différents côtés de ces alvéoles hexagonales formant des entretoises perpendiculaires aux deux couvertures 1 et 2. Les différentes parois qui forment une alvéole hexagonale de la structure alvéolaire 3 sont reliées d'un seul tenant en leurs bords inférieur et supérieur aux nappes ou couvertures inférieure 1 ou supérieure 2.

On a représenté sur la figure 1 les traces géométriques des alvéoles sur la couverture 1 qui montrent que l'ensemble de ces alvéoles forme une structure 3 en nid d'abeilles.

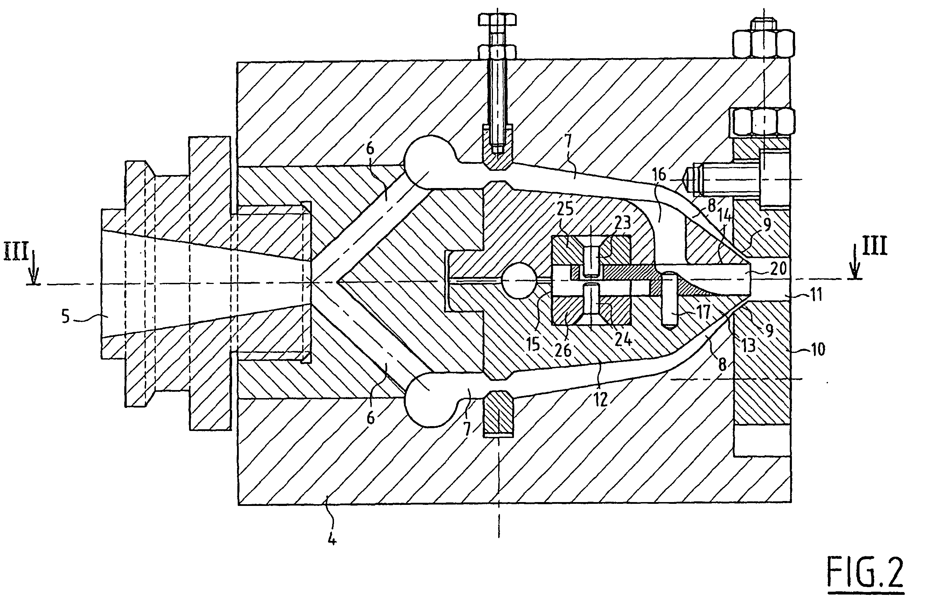

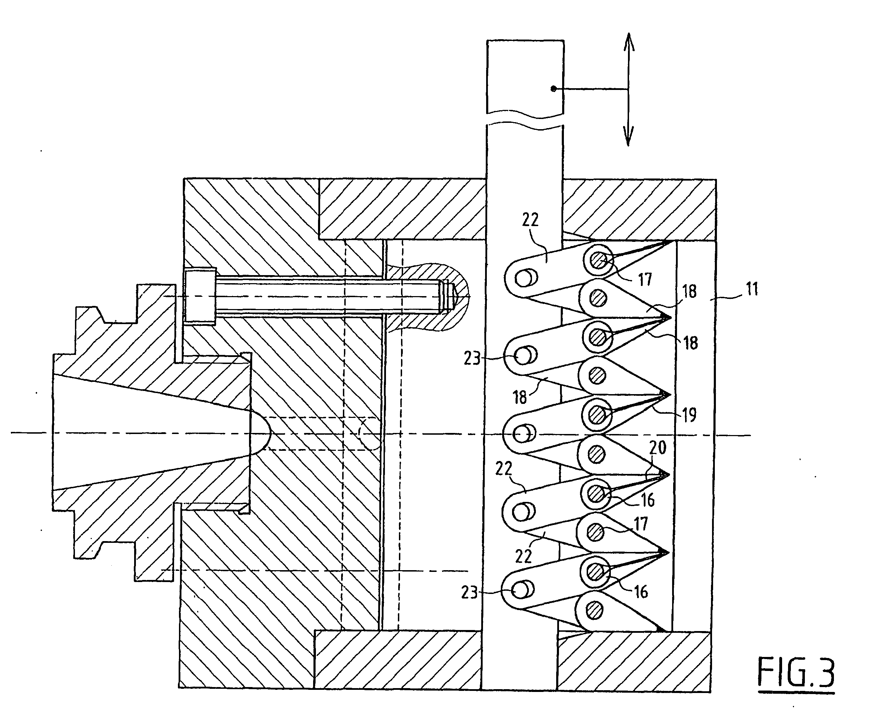

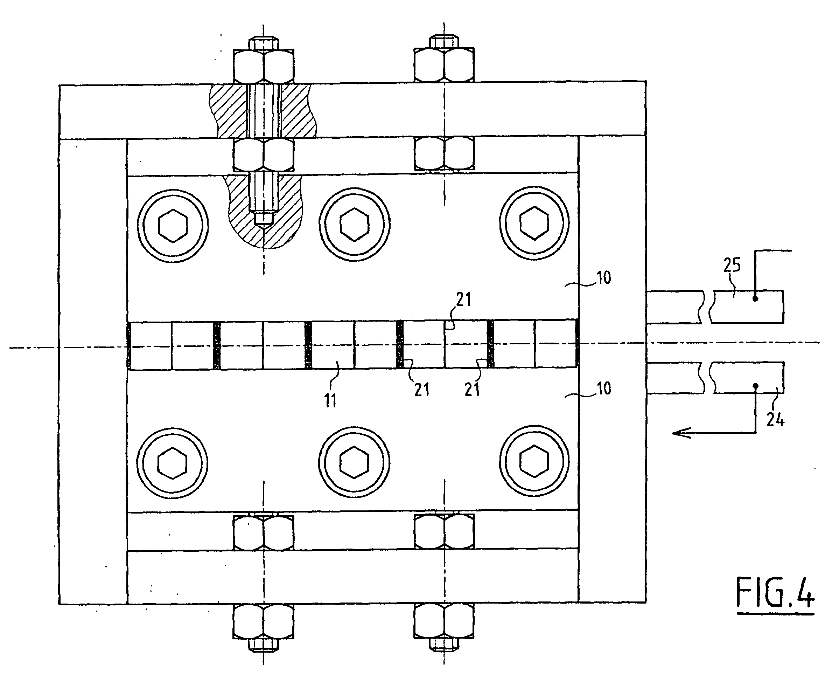

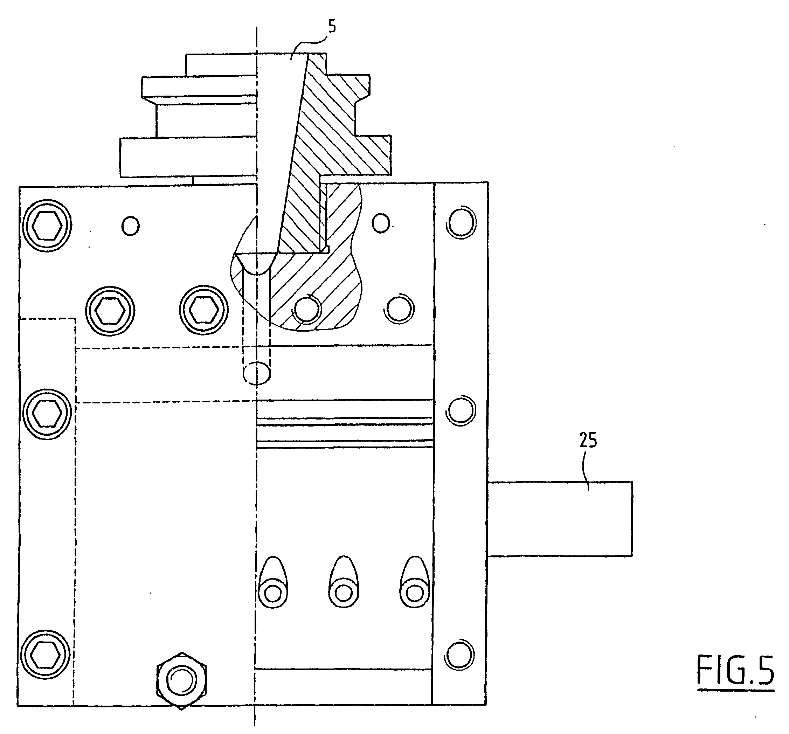

En se référant aux figures 2 à 5, on voit un dispositif formant poinçon d'extrusion pour fabriquer une nappe selon la figure 1, ce poinçon étant destiné à être fixé à la sortie d'un corps d'extrudeuse de matière thermoplastique, ce poinçon 4 comportant, à son extrémité postérieure, une embouchure d'arrivée de matière thermoplastique à l'état pâteux 5 qui rejoint, par deux canaux obliques 6 situées de part et d'autre du plan III-III, deux canaux aplatis 7 s'étendant sur toute la largeur du poinçon. Ces canaux 7 tendent à converger obliquement vers l'avant dans leurs zones 8 pour finir par former deux filières en forme de fentes parallèles 9 dont les bords supérieurs sont déterminés par des plaques de filière 10 vissées en tête du poinçon et parallèlement l'une à l'autre avec un écartement formant un passage allongé transversal 11 à travers lequel s'écoule la plaque qui vient juste d'être extrudée. Les bords inclinés externes des filières proprement dites 9 sont déterminées par des bords inclinés de façon correspondante des plaques 10.

Les faces internes, c'est-à-dire les plus proches du plan III-III médian des canaux 7, sont définies par une pièce fixe interne 12 disposée centralement dans un espace qui détermine les deux canaux 7. La partie antérieure 13 de la pièce 12 est effilée selon deux plans convergents pour finir par former les faces internes des deux filières 9.

La pièce 12 présente, en son intérieur, un évidemment faisant toute la largeur du poinçon et ayant une forme en queue d'aronde, dont la partie antérieure 14 forme un passage continu débouchant directement dans le passage 11, alors que la partie postérieure, de plus grande dimension, 15, plus en arrière, est située à l'intérieur du corps de la pièce 12. La large fente transversale 14 est reliée périodiquement aux passages 7 supérieur par des canaux transversaux 16. Ces passages 16 successifs débouchent alternativement dans les deux filières inférieure et supérieure 7.

Au droit de chaque canal transversal 16 est disposé un pivot 17 perpendiculaire au plan de l'espace allongé 14 et sur lequel se trouve pivotée une pièce d'extrusion 18 dont la partie antérieure 19 présente une forme biseautée munie d'un canal central aplati 20 en communication avec le passage 16 correspondant, ce canal 20 débouchant à l'entrée du passage 11 par la fente d'extrusion 21. Au niveau de la fente, seules les parois latérales du canal d'extrusion se trouvent matérialisées, les bords inférieur et supérieur étant alors déterminés par l'extrémité antérieure de la partie 13 de la pièce 12.

On notera que les pièces d'extrusion 18 sont positionnées dans des positions verticales alternativement inversées, correspondant aux débouchés inversés des canaux 16.

Vers l'arrière, chaque pièce 18 présente un bras 22 dont l'extrémité libre est articulés sur un pivot 23, respectivement 24, séparément articulée sur deux barres transversales respectives 25 et 26 susceptibles de coulisser en sens inverses dans le passage 15.

Le fonctionnement est alors le suivant. Les passages 7 étant alimentés en matière thermoplastique, chaude et pâteuse, une partie de la matière va se diriger par les passages 16 alternés à partir des deux passages 7 pour pénétrer dans les fentes 20 des différentes pièces 18 qui vont donc chacune extruder une lame verticale de matière par les fentes 21. Les mouvements alternés en sens contraire des barres 24, 25 permettent d'orienter successivement chacune des pièces 18 dans les directions des parois d'alvéoles à fabriquer, ces alvéoles défilant au fur et à mesure de leur formation dans le passage de sortie 11. Simultanément, par les deux fentes 9, se trouvent extrudées deux nappes de cette même matière qui sont orientées vers les alvéoles par les parties 8 des passages 7 et qui viennent se réunir, par fusion d'un seul tenant, avec les bords des parois d'alvéoles en cours de formation.

Il est ainsi possible d'extruder les plaques telles que représentées sur la figure 1.

## Revendications

1. Plaques en matière thermoplastique présentant deux nappes ou "couvertures" (1, 2) continues, parallèles, lesdites nappes étant réunies, d'un seul tenant, par un ensemble d'entretoises (3) sensiblement perpendiculaires auxdites nappes et formant des alvéoles juxtaposées, les deux nappes et les entretoises étant extrudées simultanément.

2. Plaques selon la revendication 1, **caractérisées en ce que** les alvéoles sont fermées.

3. Plaques selon l'une des revendications 1 et 2 **caractérisées en ce que** les entretoises formant les alvéoles s'étendent de façon polygonale.

4. Plaques selon l'une des revendications 1 et 2 **caractérisées en ce que** les entretoises formant les alvéoles s'étendent de façon ondulante.

5. Plaques selon l'une des revendications 1 à 4 **caractérisées en ce que** les alvéoles sont hexagonales.

6. Plaques selon l'une des revendications 1 et 2 **caractérisées en ce qu'**elles ont une épaisseur totale comprise entre 4 et 40, et notamment une épaisseur entre 7 et 12 mm.

7. Plaques selon la revendication 6 **caractérisées en ce que** la masse surfacique s'étend entre 800 et 4500 g/m² et, notamment entre 1000 et 2500 g/m².

8. Plaques selon l'une des revendications 6 et 7, **caractérisées en ce que** le rapport entre l'épaisseur d'une entretoise d'alvéole et l'épaisseur de la nappe supérieure ou inférieure, est compris entre 0,4 et 1,5 mm, notamment entre0,6 et 1,2 mm.

9. Plaques selon l'une des revendications 6 à 8 **caractérisées en ce que** les dimensions maximales de l'alvéole sont comprises entre 15 et 40 mm.

10. Plaques selon l'une quelconque des revendications 1 à 9 **caractérisées en ce qu'**elles sont réalisées en polypropylène.

11. Procédé de fabrication de ces plaques selon l'une quelconque des revendications 1 à 10 par extrusion, **caractérisé en ce que** l'on extrude simultanément une structure alvéolaire en nid d'abeilles par des moyens de filière présentant des fentes périodiques permettant chacune l'extrusion d'une entretoise et que l'on dévie périodiquement la direction d'extrusion de ces entretoises, pour obtenir une structure en alvéoles, et deux nappes de couverture parallèles, de part et d'autre des fentes d'extrusion d'entretoises de manière à amener la matière de chaque nappe au contact des bords respectifs des entretoises en formation.

12. Procédé selon la revendication 11, **caractérisé en ce que** l'on dévie la direction d'extrusion par intervalles pour extruder des entretoises polygonales.

13. Dispositif pour la mise en oeuvre du procédé selon la revendication 11 ou 12, **caractérisé en ce qu'**il comporte, associé à des moyens d'extrusion, un poinçon d'extrusion (1) comportant des moyens de filières (9) présentant des fentes périodiques (21) alimentées par, chaque fois, un canal (16, 20), des moyens (18, 24, 25) pour faire pivoter le plan desdites fentes et orienter l'extrusion des parois d'alvéoles pour obtenir une structure en nid d'abeilles, et deux fentes continues parallèles (9) alimentées par deux canaux (7) pour extruder deux nappes parallèles de part et d'autre des alvéoles en cours d'extrusion, les sorties des fentes d'extrusion (9) des nappes étant perpendiculaires aux sorties des fentes (21) formant les alvéoles, et étant orientées pour réaliser une plaque d'un seul tenant.

14. Dispositif selon la revendication 13, **caractérisé en ce que** lesdites fentes (21) sont présentées par des pièces (18) pivotant autour d'axes fixes perpendiculaires à ceux plans d'extrusion et munies de moyens pour faire pivoter les pièces (18) directement successives en sens contraires.

15. Dispositif selon la revendication 14, **caractérisé en ce que** lesdites pièces (18) directement consécutives sont alimentées respectivement à partir de deux canaux (7) situés de part et d'autre des rangées de pièces (18).

16. Dispositif selon la revendication 15 **caractérisé en ce que** lesdits canaux (7) alimentent également respectivement lesdites fentes continues parallèles (9).

## Claims

1. Thermoplastic panels which have two continuous, parallel layers or "covers" (1, 2), the said layers being connected together, as one unit, by an assembly of spacers/dividers (3) more or less perpendicular to the said layers and forming cavities in juxtaposition, the two layers and the spacers/dividers being simultaneously extruded.

2. Panels according to Claim 1, **characterised in that** the cavities are closed.

3. Panels according to one of the Claims 1 and 2, **characterised in that** the spacers/dividers forming the cavities extend in the shape of polygons.

4. Panels according to Claims 1 and 2, **characterised in that** the spacers/dividers forming the cavities extend in a wavy form.

5. Panels according to one of the Claims 1 to 4, **characterised in that** the cavities are hexagonal.

6. Panels according to one of the Claims 1 and 2, **characterised in that** they have a total thickness between 4 and 40 inclusive, and in particular a thickness between 7 and 12 mm.

7. Panels according to Claim 6, **characterised in that** the surface mass extends between 800 and 4500 g/sq.m., and in particular between 1000 and 2500 g/sq.m.

8. Panels according to one of the Claims 6 and 7, **characterised in that** the ratio between the thickness of a cavity spacer/divider and the thickness of the top and bottom layer is between 0.4 and 1.5 mm, in particular between 0.6 and 1.2 mm.

9. Panels according to one of the Claims 6 to 8, **characterised in that** the maximum dimensions of the cavity are between 15 and 40 mm inclusive.

10. Panels according to any one of the Claims 1 to 9, **characterised in that** they are made from polypropylene.

11. Method of manufacturing these panels according to any one of the Claims 1 to 10 by extrusion, **characterised in that** a honeycomb structure is extruded simultaneously by die-plate means with periodical slots enabling each of them to extrude a spacer/divider and so that the direction of extrusion of these spacers/dividers is periodically diverted to achieve a cavity structure, and two parallel cover layers, on either side of the spacer extrusion slots, so as to bring the material of each layer in contact with the respective edges of the spacers/dividers under formation.

12. Method according to Claim 11, **characterised in that** the direction of extrusion is diverted at intervals to extrude polygonal spacers/dividers.

13. Device for using the method according to Claim 11 or 12, **characterised in that** it contains, associated with means of extrusion, an extrusion punch (1) which has die-plate means (9) with periodic slots (21), each time supplied by a duct (16, 20), means (18, 24, 25) of making the plane of the said slots pivot and orientate the extrusion of the cavity walls to achieve a honeycomb structure, and two parallel continuous slots (9) supplied by two ducts (7) to extrude two parallel layers on either side of the cavities in process of extrusion, the outlets of the extrusion slots (9) of the layers being perpendicular to the outlets of the slots (21) forming the cavities, and being orientated to make a one-piece panel.

14. Device according to Claim 13, **characterised in that** the said slots (21) are offered up by components (18) pivoting around fixed axes perpendicular to those extrusion planes and fitted with means to pivot the components (18) directly in succession in opposite directions.

15. Device according to Claim 14, **characterised in that** the said directly consecutive components (18) are supplied respectively from two ducts (7) located on either side of the rows of components (18).

16. Device according to Claim 15, **characterised in that** the said ducts (7) also respectively supply the said continuous parallel slots (9).

## Patentansprüche

1. Platten aus Thermoplast mit zwei durchgehenden parallelen Schichten oder "Deckschichten" (1, 2), wobei diese Schichten einstückig durch eine Einheit von Stegen (3) verbunden sind, die zu den Schichten im Wesentlichen senkrecht sind und nebeneinandergesetzte Zellen bilden, wobei die beiden Schichten und Stege gleichzeitig extrudiert sind.

2. Platten nach Anspruch 1, **dadurch gekennzeichnet, dass** die Zellen geschlossen sind.

3. Platten nach einem der Ansprüche 1 und 2, **dadurch gekennzeichnet, dass** die die Zellen bildenden Stege sich polygonal erstrecken.

4. Platten nach einem der Ansprüche 1 und 2, **dadurch gekennzeichnet, dass** die die Zellen bildenden Stege sich wellig erstrecken.

5. Platten nach einem der Ansprüche 1 bis 4, **dadurch gekennzeichnet, dass** die Zellen hexagonal sind.

6. Platten nach einem der Ansprüche 1 und 2, **dadurch gekennzeichnet, dass** sie eine Gesamtdicke zwischen 4 und 40 und insbesondere eine Dicke zwischen 7 und 12 mm haben.

7. Platten nach Anspruch 6, **dadurch gekennzeichnet, dass** das Flächengewicht sich zwischen 800 und 4500 g/m² und insbesondere zwischen 1000 und 2500 g/m² erstreckt.

8. Platten nach einem der Ansprüche 6 und 7, **dadurch gekennzeichnet, dass** das Verhältnis zwischen der Dicke eines Zellenstegs und der Dicke der oberen oder unteren Schicht zwischen 0,4 und 1,5 mm, insbesondere zwischen 0,6 und 1,2 mm beträgt.

9. Platten nach einem der Ansprüche 6 bis 8, **dadurch gekennzeichnet, dass** die größten Abmessungen der Zelle zwischen 15 und 40 mm betragen.

10. Platten nach einem der Ansprüche 1 bis 9, **dadurch gekennzeichnet, dass** sie aus Polypropylen hergestellt sind.

11. Verfahren zur Herstellung dieser Platten nach einem der Ansprüche 1 bis 10 durch Extrusion, **dadurch gekennzeichnet, dass** man gleichzeitig eine Bienenwaben-Zellenstruktur durch Düsenmittel extrudiert, die periodische Schlitze aufweisen, die jeweils die Extrusion eines Stegs gestatten, wobei man periodisch die Extrusionsrichtung dieser Stege ablenkt, um eine Zellenstruktur zu erhalten, und zwei parallele Deckschichten zu beiden Seiten der Schlitze zur Extrusion von Stegen, so dass der Werkstoff jeder Schicht mit den jeweiligen Rändern der in Bildung begriffenen Stege in Kontakt gebracht wird.

12. Verfahren nach Anspruch 11, **dadurch gekennzeichnet, dass** man die Extrusionsrichtung in Intervallen ablenkt, um polygonale Stege zu extrudieren.

13. Vorrichtung zur Durchführung des Verfahrens nach Anspruch 11 oder 12, **dadurch gekennzeichnet, dass** sie einen Extrusionsmitteln zugeordneten Extrusionsstempel (1) umfasst, umfassend Düsenmittel (9), die periodische Schlitze (21) aufweisen, die jedes Mal durch einen Kanal (16, 20) versorgt werden, Mittel (18, 24, 25) zum Verschwenken der Ebene dieser Schlitze und zum Richten der Extrusion der Zellenwände, um eine Wabenstruktur zu erhalten, und zwei kontinuierliche parallele Schlitze (9), die durch zwei Kanäle (7) versorgt werden, um zwei parallele Schichten zu beiden Seiten der in Extrusion begriffenen Zellen zu extrudieren, wobei die Ausgänge der Schlitze (9) zur Extrusion der Schichten zu den Ausgängen der die Zellen bildenden Schlitze (21) senkrecht sind und gerichtet sind, um eine einstückige Platte herzustellen.

14. Vorrichtung nach Anspruch 13, **dadurch gekennzeichnet, dass** die Schlitze (21) von Teilen (18) aufgewiesen werden, die um feststehende Achsen verschwenkbar sind, die zu diesen beiden Extrusionsebenen senkrecht sind, und mit Mitteln versehen sind, um die direkt aufeinander folgenden Teile (18) in entgegengesetzten Richtungen zu verschwenken.

15. Vorrichtung nach Anspruch 14, **dadurch gekennzeichnet, dass** die direkt aufeinander folgenden Teile (18) jeweilig aus zwei Kanälen (7) versorgt werden, die zu beiden Seiten der Reihen von Teilen (18) gelegen sind.

16. Vorrichtung nach Anspruch 15, **dadurch gekennzeichnet, dass** diese Kanäle (7) auch jeweilig die parallelen kontinuierlichen Schlitze (9) versorgen.
